# FASCICULE DE BREVET EUROPEEN

(11) **EP 4 345 278 B1**
(45) Date de publication et mention de la délivrance du brevet: **16.07.2025**
(21) Numéro de dépôt: 23199822.0
(22) Date de dépôt: 26.09.2023
(51) Int. Cl.: F02K 1/72, F02K 1/76

(54) **TURBORÉACTEUR DOUBLE FLUX COMPORTANT UN SYSTÈME D'OBTURATION DE LA VEINE DU FLUX SECONDAIRE COMPORTANT DES VOILES**
TURBOFANTRIEBWERK MIT EINEM SYSTEM ZUM ABDICHTEN DES SEKUNDÄRSTROMKANALS MIT SEGELN
TURBOFAN COMPRISING A SYSTEM FOR BLOCKING THE SECONDARY FLOW STREAM COMPRISING SAILS

(30) Priorité: 30.09.2022 FR 2209982
(43) Date de publication de la demande: 03.04.2024
(73) Titulaire: AIRBUS OPERATIONS, 31060 Toulouse Cedex 9 (FR)
(72) Inventeur: CZAPLA, Lionel, 31060 TOULOUSE (FR); THUBERT, Benjamin, 31060 TOULOUSE (FR)
(74) Mandataire: Cabinet Le Guen Maillet

(56) Documents cités:
- US-A1- 2021 017 935
- US-A1- 2021 207 557
- US-B2- 10 655 563

## Description

### DOMAINE TECHNIQUE

La présente invention concerne un turboréacteur double flux qui comporte des voiles souples et, pour chaque voile, un bras mobile en rotation pour déplacer le voile en travers de la veine du flux secondaire, ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée.

Bien que les portes d'inversion donnent entière satisfaction, il est souhaitable de trouver des mécanismes différents, en particulier des mécanismes moins lourds.

Le document US-A-2021/207557 divulgue un turboréacteur double flux selon le préambule de la revendication 1.

### EXPOSÉ DE L'INVENTION

Un objet de la présente invention est de proposer un turboréacteur double flux qui comporte des voiles souples et, pour chaque voile, un bras mobile en rotation pour déplacer le voile en travers de la veine du flux secondaire.

À cet effet, est proposé un turboréacteur double flux présentant une direction longitudinale et comportant un moteur et une nacelle entourant le moteur qui comporte un carter de soufflante, où une veine d'un flux secondaire est délimitée entre la nacelle et le moteur et dans laquelle un flux d'air circule selon un sens d'écoulement, ladite nacelle comportant :
- une structure fixe fixée au carter de soufflante et comportant un support de cascades portant des cascades,
- un capot mobile qui est mobile en translation sur la structure fixe selon une direction de translation entre une position avancée dans laquelle le capot mobile est positionné de manière à ce qu'il soit rapproché du carter de soufflante et une position reculée dans laquelle le capot mobile est positionné de manière à ce qu'il soit éloigné du carter de soufflante pour définir entre eux une fenêtre ouverte entre la veine et l'extérieur de la nacelle et en regard des cascades,
- une pluralité de systèmes de transmission, où chacun présente au moins un bras avec une extrémité distale et une extrémité proximale montée mobile en rotation sur le système de transmission autour d'un axe de rotation globalement parallèle à la direction longitudinale, où ledit bras est mobile entre une position escamotée dans laquelle il est en dehors de la veine et une position déployée dans laquelle il est en travers de la veine, où chaque système de transmission est mobile en translation entre une position avancée correspondant à la position avancée du capot mobile et une position reculée correspondant à la position reculée du capot mobile,
- pour chaque bras, un voile souple comportant un premier bord solidaire dudit bras, un deuxième bord dont une extrémité est fixée à un système de transmission voisin et un troisième bord, où le voile est mobile alternativement entre une position repliée, correspondant à la position escamotée du bras, où le troisième bord est éloigné du moteur et une position dépliée, correspondant à la position déployée du bras, dans laquelle le troisième bord est rapproché du moteur, et
- pour chaque système de transmission, un actionneur arrangé pour assurer les déplacements du capot mobile et dudit système de transmission simultanément entre leur position avancée et leur position reculée, et inversement, et où le système de transmission est arrangé pour assurer le déplacement de chaque bras de sa position escamotée à sa position déployée pendant le déplacement du système de transmission de sa position avancée à sa position reculée et inversement,

Le turboréacteur double flux étant caractérisé en ce que l'actionneur comporte :
- un fût fixe fixé à la structure fixe et qui présente un axe longitudinal parallèle à la direction longitudinale,
- un arbre monté mobile en rotation à l'intérieur du fût fixe autour de l'axe longitudinal et entraîné en rotation par un moteur,
- un fût mobile monté à l'intérieur du fût fixe et dont une extrémité proximale est montée à l'extérieur de l'arbre, où le fût mobile présente avec le fût fixe, une liaison hélicoïdale avec un premier pas de vis autour de l'axe longitudinal et où le fût mobile présente avec l'arbre, une liaison glissière le long de l'axe longitudinal, où le système de transmission est solidaire du fût mobile, et où au niveau d'une extrémité distale, le fût mobile présente un alésage fileté coaxial avec l'axe longitudinal, et
- une tige filetée dont une extrémité proximale est vissée à l'intérieur de l'alésage fileté avec un deuxième pas de vis, et dont une extrémité distale présente avec le capot mobile, une liaison encastrement.

Le remplacement des portes d'inversion et de leurs mécanismes d'entraînement par le voile souple et l'ensemble de bras mobiles en rotation permet une réduction de masse.

Avantageusement, un système de transmission porte une paire de bras.

Avantageusement, le deuxième pas de vis est supérieur au premier pas de vis.

Selon un mode de réalisation particulier, le système de transmission comporte :
- un engrenage principal fixé de manière coaxiale sur le fût mobile,
- de part et d'autre de l'engrenage principal, une entretoise qui est taraudée et vissée sur le filetage du fût mobile et en appui contre une face de l'engrenage principal,
- pour chaque entretoise, un premier roulement à billes dans lequel ladite entretoise est encastrée,
- une base comportant de part et d'autre de l'engrenage principal, un flanc, où les deux flancs sont solidaires l'un de l'autre, où chaque flanc est traversé par un trou dans lequel est encastré un premier roulement à billes, où la base présente des moyens de blocage qui assurent son blocage en rotation par rapport à l'axe longitudinal, et
- pour chaque bras, un engrenage secondaire solidaire dudit bras et monté mobile en rotation sur la base autour d'un axe parallèle à l'axe longitudinal et entraîné par l'engrenage principal.

Selon un mode de réalisation particulier, le système de transmission comporte :
- un engrenage principal fixé de manière coaxiale sur le fût mobile,
- de part et d'autre de l'engrenage principal, une entretoise lisse et montée coulissante sur le filetage du fût mobile et en appui contre une face de l'engrenage principal,
- pour chaque entretoise, un premier roulement à billes dans lequel ladite entretoise est encastrée,
- une base comportant de part et d'autre de l'engrenage principal, un flanc, où les deux flancs sont solidaires l'un de l'autre, où chaque flanc est traversé par un trou dans lequel est encastré un premier roulement à billes, où la base présente des moyens de blocage qui assurent son blocage en rotation par rapport à l'axe longitudinal, et
- pour chaque bras, un engrenage secondaire solidaire dudit bras et monté mobile en rotation sur la base autour d'un axe parallèle à l'axe longitudinal et entraîné par l'engrenage principal.

L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un turboréacteur double flux selon l'invention,
Fig. 2 est une vue en perspective du turboréacteur double flux selon l'invention en position reculée et déployée,
Fig. 3 est une représentation schématique d'un turboréacteur double flux selon l'invention vu en coupe par un plan vertical,
Fig. 4 est une vue de face d'une paire de voiles en position repliée,
Fig. 5 est une vue de face de la paire de voiles de la Fig. 4 en position dépliée,
Fig. 6 est une vue en coupe d'un actionneur selon un mode de réalisation particulier, de l'invention, et
Fig. 7 est une vue en perspective d'un système de transmission mis en œuvre entre un actionneur et une paire de voiles.

### EXPOSÉ DÉTAILLÉ DE MODES DE RÉALISATION

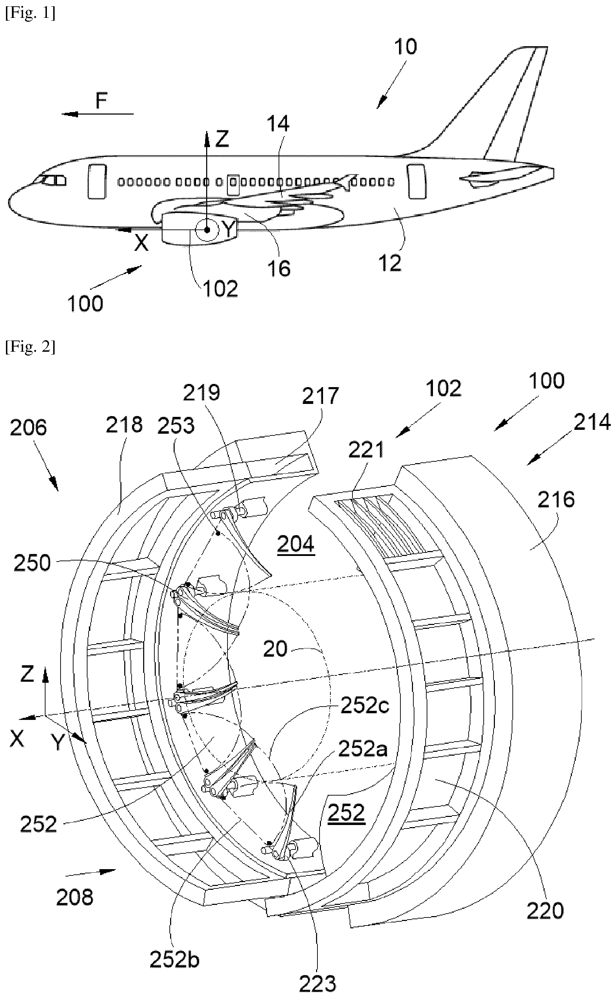

Dans la description qui suit, les termes relatifs à une position sont pris en référence au sens d'avancement d'un aéronef tel que représenté sur la Fig. 1 par la flèche F.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

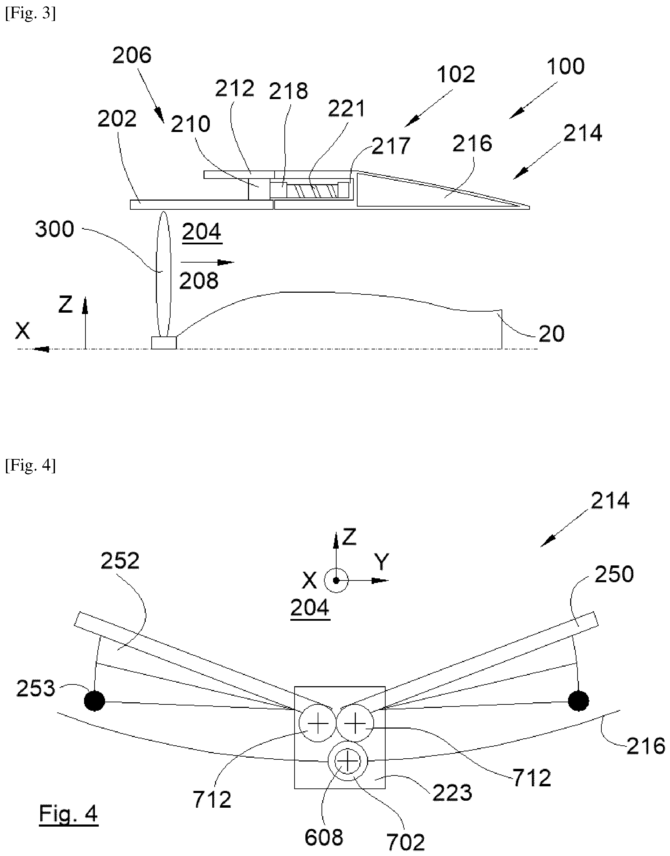

La Fig. 2 et la Fig. 3 montrent le turboréacteur double flux 100 qui présente une nacelle 102 et un moteur 20 qui est logé à l'intérieur de la nacelle 102. Le turboréacteur double flux 100 comporte également un carter de soufflante 202. Sur la Fig. 2, le moteur 20 est matérialisé par un cylindre en traits mixtes.

Dans la description qui suit, et par convention, on appelle X la direction longitudinale du turboréacteur double flux 100 qui est parallèle à l'axe longitudinal de l'aéronef 10 orienté positivement vers l'avant de l'aéronef 10, on appelle Y la direction transversale qui est horizontale lorsque l'aéronef est au sol, et Z la direction verticale, ces trois directions X, Y et Z étant orthogonales entre elles.

La Fig. 2 montre le turboréacteur double flux 100 et la Fig. 3 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 fixés au cadre avant 210 et formant une surface aérodynamique extérieure.

La nacelle 102 présente un ensemble mobile 214 qui présente un capot mobile 216 qui forme les parois extérieures de la tuyère.

La structure fixe 206 présente également un support de cascades 218 qui prend la forme d'un cylindre à parois ajourées entre lesquelles sont disposées des cascades 221. Ici, le support de cascades 218 est fixé au cadre avant 210.

Dans le mode de réalisation de l'invention présenté sur les Figs. 2 et 3, le capot mobile 216 présente un logement 217 qui est cylindrique et dans lequel se place le support de cascades 218.

Le capot mobile 216 est monté mobile en translation selon une direction de translation globalement parallèle à la direction longitudinale X sur la structure fixe 206 de la nacelle 102.

Le capot mobile 216 est mobile entre une position avancée (Fig. 3) et une position reculée (Fig. 2) et inversement. En position avancée, le capot mobile 216 est positionné le plus en avant possible par rapport au sens d'écoulement de manière à ce que le capot mobile 216 soit rapproché des panneaux extérieurs 212 et du carter de soufflante 202 et forme ainsi une surface aérodynamique continue. En position reculée, le capot mobile 216 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220 qui est en regard des cascades 221 et s'ouvre entre la veine 204 et l'extérieur.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204. En position avancée, le capot mobile 216 se positionne en regard des cascades 221 et empêche le passage du flux d'air.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100 en traversant les cascades 221.

Sur la Fig. 2, le capot mobile 216 et le support de cascades 218 sont réalisés en deux parties symétriques par rapport à un plan vertical XZ. Ces deux parties sont montées sur des poutres de la structure fixe 206, en particulier ici, une poutre 12 heures et une poutre 6 heures qui comblent les espaces entre les deux parties constituant le capot mobile 216 et le support de cascades 218. Bien sûr, le nombre de parties constituant le capot mobile 216 et le support de cascades 218 peut être différent.

Le guidage en translation du capot mobile 216 est réalisée par tous moyens appropriés, comme par exemple, des systèmes de glissières entre les poutres de la structure fixe 206 et le capot mobile 216.

Le support de cascade 218 est fixé au cadre avant 210 et plus généralement à la structure fixe 206 et en position avancée, le support de cascade 218 se retrouve à l'intérieur du capot mobile 218, ici à l'intérieur du logement 217 et en position reculée, le support de cascade 218 se retrouve entre le capot mobile 216 et le carter de soufflante 202 ainsi que les panneaux extérieurs 212 pour se trouver au niveau de la fenêtre 220.

La nacelle 102 comporte également une pluralité de systèmes de transmission 223, où chacun présente au moins un bras 250 avec une extrémité distale et une extrémité proximale montée mobile en rotation sur le système de transmission 223 autour d'un axe de rotation globalement parallèle à la direction longitudinale X.

Chaque bras 250 est ainsi mobile entre une position escamotée dans laquelle il est en dehors de la veine 204 et est plaqué contre les bords extérieurs de la veine 204 et une position déployée (Fig. 2) dans laquelle il est en travers de la veine 204. Globalement, chaque bras 250 s'étend dans un plan perpendiculaire à la direction longitudinale X.

En outre chaque système de transmission 223 est mobile en translation entre une position avancée correspondant à la position avancée du capot mobile 216 et une position reculée correspondant à la position reculée du capot mobile 216.

Pour chaque bras 250, la nacelle 102 comporte un voile souple 252 comportant un premier bord 252a solidaire dudit bras 250, un deuxième bord 252b dont une extrémité est fixée à un système de transmission 223 voisin et un troisième bord 252c qui est ici arqué. Il y a ainsi une pluralité de voiles souples 252 vus en transparence (traits mixtes) à gauche sur la Fig. 2 qui est répartie angulairement autour du moteur 20 sur le bord extérieur de la veine 204, c'est-à-dire le long du capot mobile 216. Le nombre de bras 250 et le nombre de voiles 252 dépendent des dimensions du turboréacteur double flux 100 et des dimensions des voiles 252.

En position reculée, chaque voile 252 se trouve à l'arrière de la fenêtre 220.

De manière plus précise, dans le mode de réalisation de l'invention présenté ici, chaque bord 252a-c s'étend entre une première extrémité et une deuxième extrémité. La deuxième extrémité du premier bord 252a rejoint la deuxième extrémité du deuxième bord 252b.

Le deuxième bord 252b est positionné le long du bord extérieur de la veine 204 et il est fixe et sa fixation est réalisée ici par un point fixe 253 au niveau de sa première extrémité qui est fixé sur le système de transmission 223 voisin.

Dans le mode de réalisation de l'invention présenté ici, le premier bord 252a et le deuxième bord 252b s'étendent globalement selon des rayons autour de l'axe de rotation du bras 250.

La première extrémité du troisième bord 252c rejoint la première extrémité du premier bord 252a et la deuxième extrémité du troisième bord 252c rejoint la première extrémité du deuxième bord 252b. Dans le mode de réalisation de l'invention présenté ici, le troisième bord 252c est arqué.

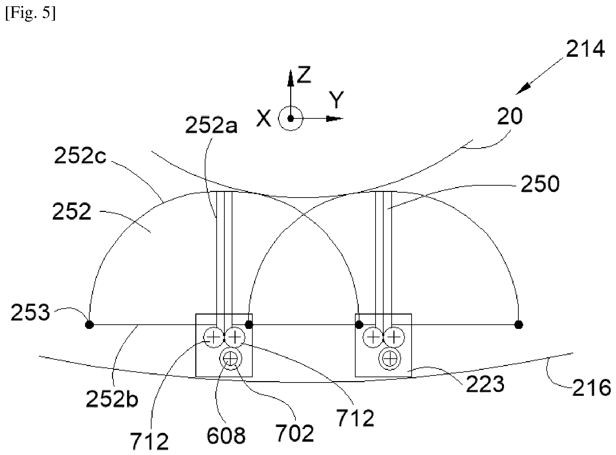

Chaque voile 252 prend ici globalement la forme d'un quart de cercle et il est mobile alternativement entre une position repliée (Fig. 4), correspondant à la position escamotée du bras 250, où le troisième bord 252c est éloigné du moteur 20 et rapproché du bord extérieur de la veine 204 pour laisser libre la veine 204 et une position dépliée (Fig. 5), correspondant à la position déployée du bras 250, dans laquelle le troisième bord 252c est rapproché du moteur 20 pour obturer la veine 204 et diriger le flux secondaire 208 vers la fenêtre 220 puis l'extérieur à travers les cascades 221. Ainsi, en position repliée, le voile 252 n'est pas en travers de la veine 204 et en position dépliée il est en travers de la veine 204.

Pour chaque système de transmission 223, la nacelle 102 comporte un actionneur 219 qui est arrangé pour assurer les déplacements du capot mobile 216 et dudit système de transmission 223 simultanément entre leur position avancée et leur position reculée, et inversement. Le système de transmission 223 est également arrangé pour assurer le déplacement de chaque bras 250 qu'il porte de sa position escamotée à sa position déployée pendant le déplacement du système de transmission 223 de sa position avancée à sa position reculée et inversement, et donc dans le même temps, le voile 252 attaché au bras 250 passe de sa position repliée à sa position dépliée et inversement.

Chaque actionneur 219 est commandé par une unité de contrôle, par exemple du type processeur, qui commande les déplacements dans un sens ou dans l'autre selon les besoins de l'aéronef 10.

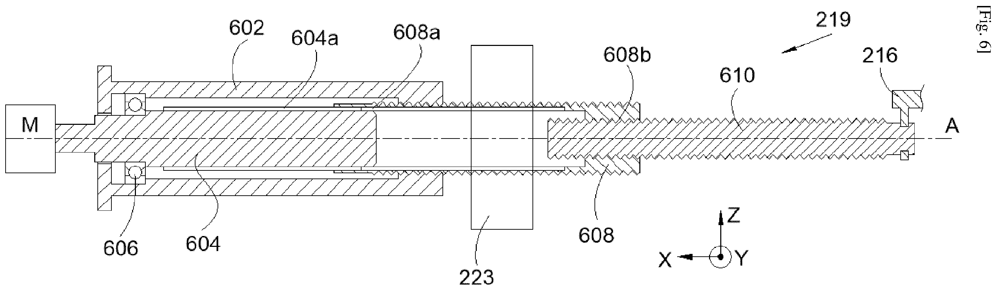

Un actionneur 219 selon un mode de réalisation particulier est représenté à la Fig. 6 et est expliqué ci-dessous.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

Pour un gain de poids, il y a ici un système de transmission 223 pour une paire de bras 250 et donc une paire de voiles 252 voisins angulairement.

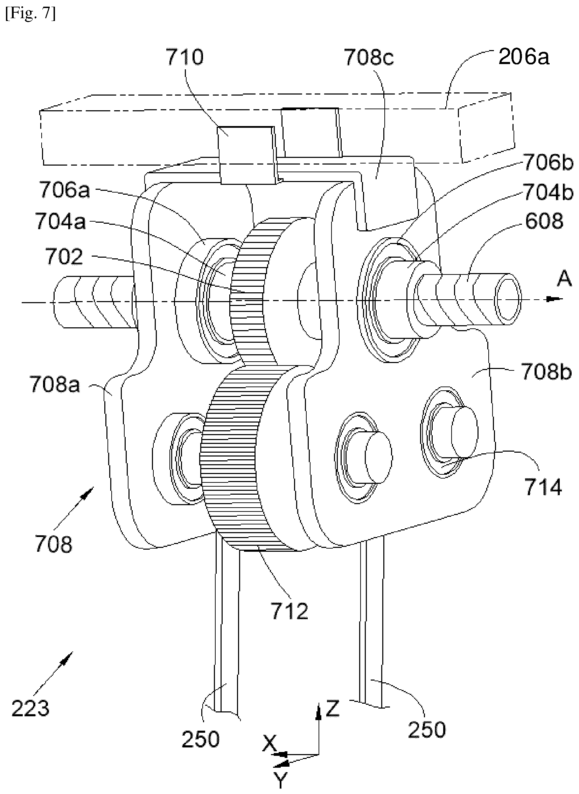

Dans le mode de réalisation de l'invention présenté à la Fig. 2, il y a un système de transmission 223 pour un seul voile 252 aux extrémités, ici à 12 heures et à 6 heures. Pour deux voiles 252 consécutifs, il y a un système de transmission 223 dont un mode de réalisation est représenté à la Fig. 7 et décrit ci-dessous.

Les voiles 252 se superposent en position dépliée et comme le montre la Fig. 5, ils viennent au plus près du moteur 20 pour obturer la veine 204.

La position avancée du système de transmission 223 correspond ainsi à la position avancée du capot mobile 216 et à la position escamotée des bras 250 et la position reculée du système de transmission 223 correspond à la position reculée du capot mobile 216 et à la position déployée des bras 250.

Selon un mode de réalisation particulier, l'actionneur 219, le capot mobile 216 et le système de transmission 223 sont arrangés pour assurer un déplacement en translation plus rapide du capot mobile 216 que celui du système de transmission 223 lorsqu'ils sont soumis à l'action de l'actionneur 219.

À partir de la position avancée du capot mobile 216, une mise en action de l'actionneur 219 déplace simultanément le capot mobile 216 et le système de transmission 223 vers leur position reculée, préférentiellement avec un déplacement plus rapide du capot mobile 216, et dans le même temps les bras 250 passent de la position escamotée à la position déployée entraînant chaque voile 252 vers sa position dépliée. À l'inverse, à partir de la position reculée du capot mobile 216, une mise en action inverse de l'actionneur 219 déplace simultanément le capot mobile 216 et le système de transmission 223 vers leur position avancée, préférentiellement avec un déplacement plus rapide du capot mobile 216, et dans le même temps les bras 250 passent de la position déployée à la position escamotée entraînant chaque voile 252 vers sa position repliée.

L'utilisation des bras 250 montés rotatifs sur le capot mobile 216 et du voile souple 252 permet un allégement de l'ensemble par rapport à l'utilisation de portes d'inversion de l'état de la technique.

Le voile souple 252 doit présenter des caractéristiques structurelles suffisantes pour résister aux efforts engendrés par le flux secondaire 208 et être suffisamment souple pour pouvoir s'escamoter sur les bords de la veine 204 en position escamotée. Selon un mode de réalisation particulier, le voile souple 252 est constitué d'une structure en mailles souples sur laquelle est fixée une peau souple telle qu'un tissu par exemple.

La Fig. 6 montre un exemple d'un actionneur 219 qui constitue un actionneur à double course.

L'actionneur 219 comporte un fût fixe 602 qui est fixé à la structure fixe 206 et, en particulier, au support de cascades 218. Le fût fixe 602 présente un axe longitudinal A qui est parallèle à la direction de translation et à la direction longitudinale X.

L'actionneur 219 comporte également un arbre 604 monté mobile en rotation à l'intérieur du fût fixe 602 autour de l'axe longitudinal A. Dans le mode de réalisation de l'invention présenté sur la Fig. 6, l'arbre 604 est guidé en rotation par un roulement à billes 606 monté entre le fût fixe 602 et l'arbre 604.

L'arbre 604 est entraîné en rotation autour de l'axe longitudinal A par un moteur M par exemple du type moteur électrique commandé par l'unité de contrôle.

L'actionneur 219 comporte également un fût mobile 608 qui est monté à l'intérieur du fût fixe 602 et dont une extrémité proximale est montée à l'extérieur de l'arbre 604.

Le fût mobile 608 présente avec le fût fixe 602, une liaison hélicoïdale autour de l'axe longitudinal A. À cette fin, le fût fixe 602 présente un taraudage sur une surface intérieure et le fût mobile 608 présente un filetage sur une surface extérieure qui coopère avec le taraudage du fût fixe 602.

Le fût mobile 608 présente avec l'arbre 604, une liaison glissière le long de l'axe longitudinal A. À cette fin, l'arbre 604 présente sur une surface extérieure des rainures 604a parallèles à l'axe longitudinal A et, pour chaque rainure 604a, le fût mobile 608 présente, sur une surface intérieure, à partir de son extrémité proximale, une rainure 608a qui coulisse le long de la rainure 604a.

Ainsi, une rotation dans un sens du moteur M va entraîner l'arbre 604 en rotation et par effet de la liaison hélicoïdale et de la liaison glissière, le fût mobile 608 se déplace en rotation et en translation parallèlement à l'axe longitudinal A, et selon le sens de rotation du moteur M, le déplacement en translation du fût mobile 608 se fera dans un sens ou dans l'autre.

Le système de transmission 223 dont un mode de réalisation est représenté à la Fig. 7 est solidaire du fût mobile 608, assurant ainsi le déplacement en translation dudit système de transmission 223 à une première vitesse liée au premier pas de vis de la liaison hélicoïdale entre le fût fixe 602 et le fût mobile 608.

Au niveau de son extrémité distale opposée à l'extrémité proximale, le fût mobile 608 présente un alésage fileté 608b coaxial avec l'axe longitudinal A.

L'actionneur 219 comporte également une tige filetée 610 dont une extrémité proximale est vissée à l'intérieur de l'alésage fileté 608b. Ainsi, la tige filetée 610 présente avec le fût mobile 608, une liaison hélicoïdale autour de l'axe longitudinal A.

Au niveau de son extrémité distale opposée à l'extrémité proximale, la tige filetée 610 présente avec le capot mobile 216, une liaison encastrement. Dans le mode de réalisation de l'invention présenté à la Fig. 6, la liaison encastrement est réalisée par une rainure circulaire réalisée au niveau de l'extrémité distale de la tige filetée 610 et où le capot mobile 216 présente une patte qui loge et est serrée dans la rainure circulaire.

Ainsi, du fait que la tige filetée 610 est bloquée en rotation par la liaison encastrement, la rotation du fût mobile 608 entraîne un déplacement de la tige filetée 610 en translation le long de l'axe longitudinal A, et selon le sens de rotation du moteur M, le déplacement en translation de la tige filetée 610 se fera dans un sens ou dans l'autre. La solidarité du capot mobile 216 avec la tige filetée 610 assure le déplacement en translation du capot mobile 216 à une deuxième vitesse liée au deuxième pas de vis de la liaison hélicoïdale entre le fût mobile 608 et la tige filetée 610.

Les sens des différents filetages et taraudages sont les mêmes pour que les déplacements se fassent dans le même sens pour un sens de rotation donné du moteur M.

Pour que le capot mobile 216 se déplace plus vite que le système de transmission 223, la deuxième vitesse doit être supérieure à la première vitesse ce qui est rendu possible par un deuxième pas de vis supérieur au premier pas de vis.

Le système de transmission 223 comporte un engrenage principal 702 qui est fixé de manière coaxiale sur le fût mobile 608 et qui tourne et se déplace donc avec lui.

De part et d'autre de l'engrenage principal 702, le système de transmission 223 comporte une entretoise 704a-b qui est taraudée et vissée sur le filetage du fût mobile 608 et en appui contre une face de l'engrenage principal 702. Chaque entretoise 704a-b est encastrée dans un premier roulement à billes 706a-b.

Selon un autre mode de réalisation, les entretoises 704a-b sont lisses et montées coulissantes sur le filetage du fût mobile 608 et en appui contre une face de l'engrenage principal 702. Chaque entretoise 704a-b est encastrée dans un premier roulement à billes 706a-b. Lors du déplacement de l'engrenage principal 702, celui-ci pousse sur l'entretoise 7040a-b qui est devant lui.

Le système de transmission 223 comporte également une base 708 constituée ici de deux flancs 708a-b disposés de part et d'autre de l'engrenage principal 702 et rendus solidaires l'un de l'autre par une poutrelle 708c. Chaque flanc 708a-b est traversé par un trou dans lequel est encastré un premier roulement à billes 706a-b.

La base 708 présente des moyens de blocage 710 qui assurent son blocage en rotation par rapport à l'axe longitudinal A. Dans le mode de réalisation de l'invention présenté à la Fig. 7, les moyens de blocage 710 sont constitués d'une rainure 710 parallèle à l'axe longitudinal A et la structure fixe 206 présente une nervure 206a (en traits fantômes) qui est parallèle à l'axe longitudinal A et qui est arrangée à l'intérieur de la rainure 710 pour assurer un guidage en translation parallèlement à l'axe longitudinal A et un blocage en rotation.

Ainsi, lors de la rotation et de la translation du fût mobile 608, l'engrenage principal 702 suit les mêmes déplacements, et du fait de l'interaction entre le taraudage de chaque entretoise 704a-b et le filetage du fût mobile 608, une rotation de ce dernier entraîne un déplacement en rotation et en translation de chaque entretoise 704a-b qui entraîne la base 708 bloquée et guidée par la nervure 206a.

Pour chaque bras 250 qu'il porte, le système de transmission 223 comporte un engrenage secondaire 712 monté mobile en rotation sur la base 708, ici entre les deux flancs 708a-b, autour d'un axe parallèle à l'axe longitudinal A et solidaire dudit bras 250. L'arbre de chaque engrenage secondaire 712 est ici encastré dans un deuxième roulement à billes 714 qui est lui-même encastré dans un trou de la base 708, ici dans le flanc 708a-b correspondant. Chaque engrenage secondaire 712 est entraîné en rotation par l'engrenage principal 702 soit de manière directe par engrènement direct entre ledit engrenage secondaire 712 et l'engrenage principal 702, soit de manière indirecte, par engrènement entre ledit engrenage secondaire 712 et l'engrenage principal 702 à travers un autre engrenage secondaire 712.

Pour que les deux voiles 252 se déplient et se replient en même temps, il est nécessaire que les sens de rotation des engrenages secondaires 712 soient inversés. Dans le mode de réalisation de l'invention présenté sur la Fig. 7 et les Figs. 4 et 5, l'engrenage principal 702 engrène avec un premier engrenage secondaire 712 et le deuxième engrenage secondaire 712 engrène avec le premier engrenage secondaire 712.

Dans le cas où il y a un seul bras 250, il y a également un seul premier engrenage secondaire 712.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant une direction longitudinale (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202) et comportant un support de cascades (218) portant des cascades (221),
- un capot mobile (216) qui est mobile en translation sur la structure fixe (206) selon une direction de translation entre une position avancée dans laquelle le capot mobile (216) est positionné de manière à ce qu'il soit rapproché du carter de soufflante (202) et une position reculée dans laquelle le capot mobile (216) est positionné de manière à ce qu'il soit éloigné du carter de soufflante (202) pour définir entre eux une fenêtre (220) ouverte entre la veine (204) et l'extérieur de la nacelle (102) et en regard des cascades (221),
- une pluralité de systèmes de transmission (223), où chacun présente au moins un bras (250) avec une extrémité distale et une extrémité proximale montée mobile en rotation sur le système de transmission (223) autour d'un axe de rotation globalement parallèle à la direction longitudinale (X), où ledit bras (250) est mobile entre une position escamotée dans laquelle il est en dehors de la veine (204) et une position déployée dans laquelle il est en travers de la veine (204), où chaque système de transmission (223) est mobile en translation entre une position avancée correspondant à la position avancée du capot mobile (216) et une position reculée correspondant à la position reculée du capot mobile (216),
- pour chaque bras (250), un voile souple (252) comportant un premier bord (252a) solidaire dudit bras (250), un deuxième bord (252b) dont une extrémité est fixée à un système de transmission (223) voisin et un troisième bord (252c), où le voile (252) est mobile alternativement entre une position repliée, correspondant à la position escamotée du bras (250), où le troisième bord (252c) est éloigné du moteur (20) et une position dépliée, correspondant à la position déployée du bras (250), dans laquelle le troisième bord (252c) est rapproché du moteur (20), et
- pour chaque système de transmission (223), un actionneur (219) arrangé pour assurer les déplacements du capot mobile (216) et dudit système de transmission (223) simultanément entre leur position avancée et leur position reculée, et inversement, et où le système de transmission (223) est arrangé pour assurer le déplacement de chaque bras (250) de sa position escamotée à sa position déployée pendant le déplacement du système de transmission (223) de sa position avancée à sa position reculée et inversement,
le turboréacteur double flux (100) étant **caractérisé en ce que** l'actionneur (219) comporte :
- un fût fixe (602) fixé à la structure fixe (206) et qui présente un axe longitudinal (A) parallèle à la direction longitudinale (X),
- un arbre (604) monté mobile en rotation à l'intérieur du fût fixe (602) autour de l'axe longitudinal (A) et entraîné en rotation par un moteur (M),
- un fût mobile (608) monté à l'intérieur du fût fixe (602) et dont une extrémité proximale est montée à l'extérieur de l'arbre (604), où le fût mobile (608) présente avec le fût fixe (602), une liaison hélicoïdale avec un premier pas de vis autour de l'axe longitudinal (A) et où le fût mobile (608) présente avec l'arbre (604), une liaison glissière le long de l'axe longitudinal (A), où le système de transmission (223) est solidaire du fût mobile (608), et où au niveau d'une extrémité distale, le fût mobile (608) présente un alésage fileté (608b) coaxial avec l'axe longitudinal (A), et
- une tige filetée (610) dont une extrémité proximale est vissée à l'intérieur de l'alésage fileté (608b) avec un deuxième pas de vis, et dont une extrémité distale présente avec le capot mobile (216), une liaison encastrement.

2. Turboréacteur double flux (100) selon la revendication 1, **caractérisé en ce qu'**un système de transmission (223) porte une paire de bras (250).

3. Turboréacteur double flux (100) selon l'une des revendications 1 ou 2, **caractérisé en ce que** le deuxième pas de vis est supérieur au premier pas de vis.

4. Turboréacteur double flux (100) selon l'une des revendications 1 à 3, **caractérisé en ce que** le système de transmission (223) comporte :
- un engrenage principal (702) fixé de manière coaxiale sur le fût mobile (608),
- de part et d'autre de l'engrenage principal (702), une entretoise (704a-b) qui est taraudée et vissée sur le filetage du fût mobile (608) et en appui contre une face de l'engrenage principal (702),
- pour chaque entretoise (704a-b), un premier roulement à billes (706a-b) dans lequel ladite entretoise (704a-b) est encastrée,
- une base (708) comportant de part et d'autre de l'engrenage principal (702), un flanc (708a-b), où les deux flancs (708a-b) sont solidaires l'un de l'autre, où chaque flanc (708a-b) est traversé par un trou dans lequel est encastré un premier roulement à billes (706a-b), où la base (708) présente des moyens de blocage qui assurent son blocage en rotation par rapport à l'axe longitudinal (A), et
- pour chaque bras (250), un engrenage secondaire (712) solidaire dudit bras (250) et monté mobile en rotation sur la base (708) autour d'un axe parallèle à l'axe longitudinal (A) et entraîné par l'engrenage principal (702).

5. Turboréacteur double flux (100) selon l'une des revendications 1 à 3, **caractérisé en ce que** le système de transmission (223) comporte :
- un engrenage principal (702) fixé de manière coaxiale sur le fût mobile (608),
- de part et d'autre de l'engrenage principal (702), une entretoise (704a-b) lisse et montée coulissante sur le filetage du fût mobile (608) et en appui contre une face de l'engrenage principal (702),
- pour chaque entretoise (704a-b), un premier roulement à billes (706a-b) dans lequel ladite entretoise (704a-b) est encastrée,
- une base (708) comportant de part et d'autre de l'engrenage principal (702), un flanc (708a-b), où les deux flancs (708a-b) sont solidaires l'un de l'autre, où chaque flanc (708a-b) est traversé par un trou dans lequel est encastré un premier roulement à billes (706a-b), où la base (708) présente des moyens de blocage qui assurent son blocage en rotation par rapport à l'axe longitudinal (A), et
- pour chaque bras (250), un engrenage secondaire (712) solidaire dudit bras (250) et monté mobile en rotation sur la base (708) autour d'un axe parallèle à l'axe longitudinal (A) et entraîné par l'engrenage principal (702).

6. Aéronef (10) comportant au moins un turboréacteur double flux (100) selon l'une des revendications précédentes.

## Patentansprüche

1. Mantelstromtriebwerk (100), welches eine Längsrichtung (X) aufweist und ein Kerntriebwerk (20) und eine das Kerntriebwerk (20) umgebende Gondel (102) umfasst, welche ein Gebläsegehäuse (202) umfasst, wobei ein Strömungskanal (204) eines Sekundärstroms (208) zwischen der Gondel (102) und dem Kerntriebwerk (20) begrenzt wird, in welchem ein Luftstrom in einer Strömungsrichtung strömt, wobei die Gondel (102) umfasst:
- eine feststehende Struktur (206), die am Gebläsegehäuse (202) befestigt ist und einen Kaskadenträger (218) umfasst, der Kaskaden (221) trägt,
- eine bewegliche Haube (216), die auf der feststehenden Struktur (206) in einer Translationsrichtung translatorisch beweglich ist zwischen einer vorgeschobenen Position, in der die bewegliche Haube (216) so positioniert ist, dass sie an das Gebläsegehäuse (202) angenähert ist, und einer zurückgeschobenen Position, in der die bewegliche Haube (216) so positioniert ist, dass sie von dem Gebläsegehäuse (202) entfernt ist, um zwischen ihnen ein offenes Fenster (220) zwischen dem Strömungskanal (204) und der Außenseite der Gondel (102) und gegenüber den Kaskaden (221) zu definieren,
- eine Vielzahl von Übertragungssystemen (223), wobei jedes mindestens einen Arm (250) mit einem distalen Ende und einem proximalen Ende, das um eine zu der Längsrichtung (X) im Wesentlichen parallele Drehachse drehbeweglich an dem Übertragungssystem (223) angebracht ist, aufweist, wobei der Arm (250) zwischen einer eingefahrenen Position, in der er sich außerhalb des Strömungskanals (204) befindet, und einer ausgefahrenen Position, in der er sich quer zu dem Strömungskanal (204) befindet, beweglich ist, wobei jedes Übertragungssystem (223) zwischen einer vorgeschobenen Position, die der vorgeschobenen Position der beweglichen Haube (216) entspricht, und einer zurückgeschobenen Position, die der zurückgeschobenen Position der beweglichen Haube (216) entspricht, translatorisch beweglich ist,
- für jeden Arm (250), ein flexibles Segel (252), das einen ersten Rand (252a), der mit dem Arm (250) fest verbunden ist, einen zweiten Rand (252b), von dem ein Ende an einem benachbarten Übertragungssystem (223) befestigt ist, und einen dritten Rand (252c) umfasst, wobei das Segel (252) wahlweise zwischen einer zusammengefalteten Position, die der eingefahrenen Position des Arms (250) entspricht, wo der dritte Rand (252c) von dem Kerntriebwerk (20) entfernt ist, und einer auseinandergefalteten Position, die der ausgefahrenen Position des Arms (250) entspricht, in der der dritte Rand (252c) an das Kerntriebwerk (20) angenähert ist, beweglich ist, und
- für jedes Übertragungssystem (223), einen Aktuator (219), der dazu angeordnet ist, die Verschiebungen der beweglichen Haube (216) und des Übertragungssystems (223) zwischen ihrer vorgeschobenen Position und ihrer zurückgeschobenen Position und umgekehrt simultan sicherzustellen, und wobei das Übertragungssystem (223) dazu angeordnet ist, die Verschiebung jedes Arms (250) von seiner eingefahrenen Position in seine ausgefahrene Position während der Verschiebung des Übertragungssystems (223) von seiner vorgeschobenen Position in seine zurückgeschobene Position und umgekehrt sicherzustellen,
wobei das Mantelstromtriebwerk (100) **dadurch gekennzeichnet ist, dass** der Aktuator (219) umfasst:
- einen feststehenden Schaft (602), der an der feststehenden Struktur (206) befestigt ist und der eine Längsachse (A) parallel zu der Längsrichtung (X) aufweist,
- eine Welle (604), die im Inneren des feststehenden Schafts (602) um die Längsachse (X) drehbeweglich angebracht ist und durch einen Motor (M) drehangetrieben wird,
- einen beweglichen Schaft (608), der im Inneren des feststehenden Schafts (602) angebracht ist und von dem ein proximales Ende an der Außenseite der Welle (604) angebracht ist, wobei der bewegliche Schaft (608) mit dem feststehenden Schaft (602) eine Schraubverbindung mit einer ersten Gewindesteigung um die Längsachse (A) aufweist und wobei der bewegliche Schaft (608) mit der Welle (604) eine Gleitschienenverbindung entlang der Längsachse (A) aufweist, wobei das Übertragungssystem (223) mit dem beweglichen Schaft (608) fest verbunden ist und wobei der bewegliche Schaft (608) an einem distalen Ende eine Gewindebohrung (608b) aufweist, die zu der Längsachse (A) koaxial ist, und
- eine Gewindestange (610), von der ein proximales Ende in das Innere der Gewindebohrung (608b) mit einer zweiten Gewindesteigung geschraubt ist und von der ein distales Ende mit der beweglichen Haube (216) eine Einsteckverbindung aufweist.

2. Mantelstromtriebwerk (100) nach Anspruch 1, **dadurch gekennzeichnet, dass** ein Übertragungssystem (223) ein Paar Arme (250) trägt.

3. Mantelstromtriebwerk (100) nach einem der Ansprüche 1 oder 2, **dadurch gekennzeichnet, dass** die zweite Gewindesteigung größer als die erste Gewindesteigung ist.

4. Mantelstromtriebwerk (100) nach einem der Ansprüche 1 bis 3, **dadurch gekennzeichnet, dass** das Übertragungssystem (223) umfasst:
- ein Hauptzahnrad (702), das koaxial auf dem beweglichen Schaft (608) befestigt ist,
- auf beiden Seiten des Hauptzahnrads (702), ein Distanzstück (704a-b), das mit einem Gewinde versehen ist und auf das Gewinde des beweglichen Schafts (608) geschraubt ist und an einer Seite des Hauptzahnrads (702) anliegt,
- für jedes Distanzstück (704a-b), ein erstes Kugellager (706a-b), in das das Distanzstück (704a-b) eingesteckt ist,
- eine Basis (708), die zu beiden Seiten des Hauptzahnrads (702) ein Seitenteil (708a-b) umfasst, wobei die zwei Seitenteile (708a-b) fest miteinander verbunden sind, wobei jedes Seitenteil (708a-b) von einem Loch durchquert wird, in das ein erstes Kugellager (706ab) eingesteckt ist, wobei die Basis (708) Blockiermittel aufweist, die eine Blockierung ihrer Drehbewegung in Bezug auf die Längsachse (A) sicherstellen, und
- für jeden Arm (250), ein sekundäres Zahnrad (712), das mit dem Arm (250) fest verbunden ist und um eine zu der Längsachse (A) parallele Achse drehbeweglich an der Basis (708) angebracht ist und durch das Hauptzahnrad (702) angetrieben wird.

5. Mantelstromtriebwerk (100) nach einem der Ansprüche 1 bis 3, **dadurch gekennzeichnet, dass** das Übertragungssystem (223) umfasst:
- ein Hauptzahnrad (702), das koaxial auf dem beweglichen Schaft (608) befestigt ist,
- auf beiden Seiten des Hauptzahnrads (702), ein glattes Distanzstück (704a-b), das gleitend auf dem Gewinde des beweglichen Schafts (608) angebracht ist und an einer Seite des Hauptzahnrads (702) anliegt,
- für jedes Distanzstück (704a-b), ein erstes Kugellager (706a-b), in das das Distanzstück (704a-b) eingesteckt ist,
- eine Basis (708), die zu beiden Seiten des Hauptzahnrads (702) ein Seitenteil (708a-b) umfasst, wobei die zwei Seitenteile (708a-b) fest miteinander verbunden sind, wobei jedes Seitenteil (708a-b) von einem Loch durchquert wird, in das ein erstes Kugellager (706ab) eingesteckt ist, wobei die Basis (708) Blockiermittel aufweist, die eine Blockierung ihrer Drehbewegung in Bezug auf die Längsachse (A) sicherstellen, und
- für jeden Arm (250), ein sekundäres Zahnrad (712), das mit dem Arm (250) fest verbunden ist und um eine zu der Längsachse (A) parallele Achse drehbeweglich an der Basis (708) angebracht ist und durch das Hauptzahnrad (702) angetrieben wird.

6. Luftfahrzeug (10), welches mindestens ein Mantelstromtriebwerk (100) nach einem der vorhergehenden Ansprüche umfasst.

## Claims

1. Bypass turbofan (100) having a longitudinal direction (X) and including an engine (20) and a nacelle (102) surrounding the engine (20) that includes a fan cowl (202) in which a stream (204) of a secondary flow (208) is delimited between the nacelle (102) and the engine (20) and in which a flow of air circulates in a flow direction, said nacelle (102) including:
- a fixed structure (206) fixed to the fan cowl (202) and including a cascade support (218) carrying cascades (221),
- a mobile cowl (216) that is mobile in translation on the fixed structure (206) in a translation direction between an advanced position in which the mobile cowl (216) is positioned so that it is close to the fan cowl (202) and a retracted position in which the mobile cowl (216) is positioned so that it is far from the fan cowl (202) to define between them an open window (220) between the stream (204) and the exterior of the nacelle (102) and facing the cascades (221),
- a plurality of transmission systems (223) each of which includes at least one arm (250) with a distal end and a proximal end mobile in translation on the transmission system (223) about a rotation axis globally parallel to the longitudinal direction (X), in which said arm (250) is mobile between a retracted position in which it is outside the stream (204) and a deployed position in which it is across the stream (204), in which each transmission system (223) is mobile in translation between an advanced position corresponding to the advanced position of the mobile cowl (216) and a retracted position corresponding to the retracted position of the mobile cowl (216),
- for each arm (250), a flexible veil (252) having a first edge (252a) fastened to said arm (250), a second edge (252b) one end of which is fixed to an adjoining transmission system (223), and a third edge (252c), in which the veil (252) is mobile alternately between a folded position corresponding to the retracted position of the arm (250) in which the third edge (252c) is far from the engine (20) and an unfolded position corresponding to the deployed position of the arm (250), in which the third edge (252c) is close to the engine (20), and
- for each transmission system (223), an actuator (219) adapted to move the mobile cowl (216) and said transmission system (223) simultaneously between their advanced position and their retracted position and vice versa and in which the transmission system (223) is adapted to move each arm (250) from its retracted position to its deployed position during movement of the transmission system (223) from its advanced position to its retracted position and vice versa,
the bypass turbofan (100) being **characterised in that** the actuator (219) includes:
- a fixed tube (602) fixed to the fixed structure (206) and that has a longitudinal axis (A) parallel to the longitudinal direction (X),
- a shaft (604) mobile in rotation inside the fixed tube (602) about the longitudinal axis (A) and driven in rotation by a motor (M),
- a mobile tube (608) mounted inside the fixed tube (602) and a proximal end of which is mounted outside the shaft (604), the mobile tube (608) having a helical connection with the fixed tube (602) with a first screw pitch about the longitudinal axis (A) and the mobile tube (608) having with the shaft (604) a sliding connection along the longitudinal axis (A), in which the transmission system (223) is fastened to the mobile tube (608) and in which at the level of a distal end the mobile tube (608) has an internally threaded bore (608b) coaxial with the longitudinal axis (A), and
- a threaded rod (610) a proximal end of which is screwed into the internally threaded bore (608b) with a second screw pitch and a distal end of which has a pressed-in connection to the mobile cowl (216).

2. Bypass turbofan (100) according to claim 1 **characterised in that** a transmission system (223) carries a pair of arms (250).

3. Bypass turbofan (100) according to either one of claims 1 or 2, **characterised in that** the second screw pitch is greater than the first screw pitch.

4. Bypass turbofan (100) according to either one of claims 1 to 3, **characterised in that** the transmission system (223) includes:
- a main gear (702) fixed coaxially onto the mobile tube (608),
- on respective opposite sides of the main gear (702) a spacer (704a-b) that is internally threaded and screwed onto the external thread of the mobile tube (608) and bears against a face of the main gear (702),
- for each spacer (704a-b), a first ball bearing (706a-b) into which said spacer (704a-b) is pressed,
- a base (708) including on respective opposite sides of the main gear (702) a flange (708a-b), in which the two flanges (708a-b) are fastened to one another, in which each flange (708a-b) has a hole through it into which a first ball bearing (706a-b) is pressed, in which the base (708) includes immobilising means for immobilising it in rotation relative to the longitudinal axis (A), and
- for each arm (250), a secondary gear (712) fastened to said arm (250) and mobile in rotation on the base (708) about an axis parallel to the longitudinal axis (A) and driven by the main gear (702).

5. Bypass turbofan (100) according to either one of claims 1 to 3, **characterised in that** the transmission system (223) includes:
- a main gear (702) fixed coaxially onto the mobile tube (608),
- on respective opposite sides of the main gear (702) a smooth spacer (704a-b) mounted to slide on the external thread of the mobile tube (608) and bearing against a face of the main gear (702),
- for each spacer (704a-b), a first ball bearing (706a-b) into which said spacer (704a-b) is pressed,
- a base (708) including on respective opposite sides of the main gear (702) a flange (708a-b), in which the two flanges (708a-b) are fastened to one another, in which each flange (708a-b) has a hole through it into which a first ball bearing (706a-b) is pressed, in which the base (708) includes immobilising means that immobilise it in rotation relative to the longitudinal axis (A), and
- for each arm (250), a secondary gear (712) fastened to said arm (250) and mobile in rotation on the base (708) about an axis parallel to the longitudinal axis (A) and driven by the main gear (702).

6. Aircraft (10) including at least one bypass turbofan (100) according to any one of the preceding claims.
